# EUROPÄISCHE PATENTSCHRIFT

(11) **EP 1 975 494 B1**
(45) Veröffentlichungstag und Bekanntmachung des Hinweises auf die Patenterteilung: **19.10.2011**
(21) Anmeldenummer: 07024043.7
(22) Anmeldetag: 12.12.2007
(51) Int. Cl.: H02G 15/18, B29C 53/78, B29C 65/08, B29C 65/76, B29C 61/06, B29C 65/00, F16L 11/24

(54) **Verfahren und Vorrichtung zur Herstellung einer Stützwendel**
Method and apparatus for manufacturing a helical support
Procédé et dispositif pour produire une hélice d'appui

(30) Priorität: 27.03.2007 DE 102007015167
(43) Veröffentlichungstag der Anmeldung: 01.10.2008
(73) Patentinhaber: REHAU AG + Co, 95111 Rehau (DE)
(72) Erfinder: Rödel, Silvio, 08606 Oelsnitz (DE)

(56) Entgegenhaltungen:
- EP-A- 0 555 620
- WO-A-96/24977
- CH-A5- 673 256
- DE-C1- 10 164 367
- GB-A- 1 278 332
- JP-A- 8 025 472
- JP-A- 58 059 053
- JP-A- 59 178 215
- JP-A- 2000 102 156
- JP-A- 2004 328 910
- JP-A- 2006 248 045

## Beschreibung

Die Erfindung betrifft ein Verfahren zur Herstellung einer Stützwendel, die insbesondere als Bestandteil eines Kaltschrumpfsystems eingesetzt wird, wobei die Geometrie der Stützwendel durch ein spiralförmiges Aufwickeln eines Profilbandes auf einen Wickeldorn erzeugt wird, so dass die zueinander benachbarten Profilbandabschnitte eine spiralförmige Kontaktfläche bilden, wobei zur Fixierung der Stützwendelgeometrie- im Bereich der Kontaktfläche eine Verschweißung der benachbarten Profilbandabschnitte erfolgt und wobei die Verschweißung mittels Ultraschall erfolgt. Gegenstand der Erfindung ist ferner eine Vorrichtung zur Herstellung einer Stützwendel gemäß dem Oberbegriff desAnspruchs 4. JP 2004 328910 A offenbart eine Vorrichtung der genannten Art.

Stützwendeln werden beispielsweise in der Elektroindustrie als Bestandteile eines Kaltschrumpfsystems eingesetzt. Über die Stützwendel wird eine Kaltschrumpfhülse gezogen, welche im allgemeinen aus einem Spritzguss- oder Extrusionsteil aus Silikon oder Gummi besteht. Dabei wird die Kaltschrumpfhülse in einem ersten Schritt aufgeweitet und über die Stützwendel gezogen. Die Hülse schrumpft dann bis auf den Außendurchmesser der Stützwendel auf. Die Stützwendel dient zur Verhinderung eines weiteren Zusammenschrumpfens der Kaltschrumpfhülse während einer Lagerung bzw. während eines Transportes. Auf einer Baustelle wird die Kaltschrumpfhülse mit der darin befindlichen Stützwendel beispielsweise über ein offenes Kabelende einer in der Erde verlegten Starkstromleitung gezogen. Anschließend wird das Kabelende mit einem weiteren Kabelende über einen Kabelschuh verbunden. Die Kaltschrumpfhülse mit der darin befindlichen Stützwendel wird über die Kabelverbindungsstelle gebracht. Darauffolgend wird die Stützwendel aus der Kaltschrumpfhülse herausgezogen, indem die Schweißverbindung benachbarter Profilbandabschnitte sukzessive wieder aufgebrochen wird. Nach Entfernen des Profilbandes schrumpft die Kaltschrumpfhülse auf die Kabelverbindung auf und schützt diese vor Feuchtigkeit und Verschmutzung.

Eine Stützwendel ist beispielsweise aus der Patentschrift DE 10164367 C1 bekannt, wobei hier teilvernetztes Material zum Einsatz kommt. Das Verschweißen im Bereich der Kontaktfläche erfolgt durch lokales Aufschmelzen im entsprechenden Querschnittsbereich des Profilbandes, wobei zwecks Unterstützung des Schweißvorganges zusätzlich ein axialer Druck aufgebracht werden kann. Die bekannte Herstellung der Stützwendel hat sich in der Praxis bewährt. Allerdings weist dieser Stand der Technik auch gewisse Nachteile auf. So führen beispielsweise geringfügige Abweichungen hinsichtlich der Temperatur während des Schweißvorganges, der Heizzeit, des Vernetzungsgrades des üblicherweise aus Kunststoff extrudierten Profilbandmateriales und auch hinsichtlich der Profilgeometrie zu stark schwankenden Schweißergebnissen und damit zu ebenso stark schwankenden Trennkräften, die zum Aufbrechen der Stützwendel entlang der Kontaktfläche erforderlich ist. Bei zu geringen Trennkräften zum Zerstören der Schweißverbindung kann durch die Schrumpfkraft der Kaltschrumpfhülse die Verbindung ungewollt aufgebrochen werden, so dass die Kaltschrumpfhülse schon vor ihrer Montage an der Baustelle zusammenschrumpft und damit unbrauchbar wird. Bei zu hohen Trennkräften entlang der Schweißverbindung ist hingegen eine Entfernung der Stützwendel aus der Kaltschrumpfhülse nur erschwert bzw. gar nicht mehr möglich, so dass auch hier die gewünschte Funktion des Verbundbauteils, bestehend aus Stützwendel und Kaltschrumpfhülse, nicht mehr gewährleistet ist.

Bei einem Verschweißen durch Kontaktwärme wird das Profilband üblicherweise auf einen Wickeldorn aufgewickelt und fixiert. Im Anschluss daran wird der Wickeldorn mit dem darauf aufgewickelten und fixierten Profilband auf einen Heizdorn aufgesteckt. Dieser wird auf eine bestimmte Temperatur aufgeheizt und gibt entsprechend Wärme an den Wickeldorn und somit schließlich an das aufgewickelte Profilband ab. Das Profilband wird durch diesen Wärmeeintrag lokal bis zu seinem Schmelzpunkt erhitzt, wobei der Grad des Aufschmelzens durch den Vernetzungsgrad des verwendeten Kunststoffmaterials des Profilbandes bestimmt wird. Nach einer vordefinierten Zeit wird der Wickeldorn vom Heizdorn entfernt und abgekühlt. Nachdem dieser abgekühlt ist, wird die Fixierung des Profilbandes gelöst und der Wickeldorn aus dem nunmehr zur Stützwendel verschweißten Profilband herausgedrückt. Um die Stützwendel auf der Baustelle aus der Kaltschrumpfhülse wieder entfernen zu können, darf die Trennkraft der Verbindungsstellen einen bestimmten Wert nicht überschreiten, welcher im Bereich von ca. 60 N angesiedelt ist. Die Trennkraft wird durch den Verschweißungsgrad der benachbarten Profilbandabschnitte beeinflusst.

Beim Erwärmen des Profilbandes zur Durchführung des Verschweißvorganges kommt es zu einer Längenausdehnung des Profiles. Um Einflüsse dieser Längenausdehnung auf die Verschweißung zu verhindern, muss das gewickelte Profilband einerseits locker auf der Wickelhülse sitzen, damit es sich bewegen kann. Ein zu lockerer Sitz ist jedoch zu vermeiden, da andererseits das Profilband zur Formgebung der Stützwendel auf der Wickelhülse fixiert sein muss. Es muss daher hinsichtlich des Sitzes des Profilbandes auf der Wickelhülse ein Kompromiss gefunden werden, bei dem einerseits eine gewisse Ausdehnung des Profilbandes noch möglich ist, andererseits aber auch noch eine gewisse Fixierung des Profilbandes auf der Wickelhülse gewährleistet ist. Aufgrund der erforderlichen Fixierung ist keine vollständig freie Ausdehnung des Profilbandes in Längsrichtung möglich, so dass dieses sich während des Schweißvorganges stets nach außen wölbt. Dieser Effekt kann zu ungleichmäßigen Druckverhältnissen an den Schweißstellen und somit zu einer unterschiedlich starken Verschweißung mit entsprechend variierenden Trennkräften führen.

Ein Verfahren mit den eingangs beschriebenen Merkmalen ist aus der JP 2004 328910 A sowie der GB 1 278 332 A bekannt, wobei die Verschweißung hier während des Wickelvorgangs erfolgt. Die CH 673 256 beschreibt ein Verfahren zur Herstellung eines Rohres im Wickelverfahren mittels Ultraschallschweißung.

Der Erfindung liegt die Aufgabe zugrunde, eine Stützwendel mit den eingangs beschriebenen Merkmalen anzugeben, die eine einfache Herstellung und gleichzeitig die Einstellung einer präzisen Zerstörungs-Trennkraft erlaubt.

Erfindungsgemäß wird die Aufgabe durch die Merkmale des Anspruchs 1 gelöst, insbesondere dadurch dass der Schweißvorgang nach dem Wickelvorgang durchgeführt wird und hierbei eine gleichzeitige Verschweißung über die gesamte spiralförmige Kontaktfläche erfolgt. Der Schweißvorgang kann derart durchgeführt werden, dass die spiralförmige Schweißnaht Unterbrechungen aufweist. Je größer die Unterbrechungsbereiche ausgebildet sind, umso geringer ist die aufzuwendende Trennkraft beim Zerstören der Stützwendel. Gemäß einer bevorzugten Ausführungsform der Stützwendel besteht das Profilband aus unvernetztem bzw. einem Vernetzungsgrad kleiner 50 %, bevorzugt kleiner 30 %, insbesondere kleiner 10 %, aufweisenden polymeren Material. Als Grundmaterial kommt beispielsweise Polypropylen, Polyethylen, Polyamid oder aber auch Polyvinylchlorid in Frage, wobei grundsätzlich alle Thermoplaste in allen Farben geeignet sind. Die Steuerung der Verschweißung und damit die genaue Einstellung der Trennkraft ist beispielsweise über den Vernetzungsgrad des verwendeten Kunststoffes einstellbar. Eine Steuerung ist auch über die Schweißnahtbreite möglich, wobei diese wiederum über die Geometrie der als Schweißrichtungsgeber fungierenden Distanzrippe im Bereich der Verschweißung eingestellt werden kann. Eine Einstellung der Zerstörungs-Trennkraft ist außerdem über die bereits erwähnten Schweißnahtunterbrechungen möglich, wobei zwischen einer durchgehenden Schweißnaht bis hin zu einer nur noch punktuell einmal pro Umfang verschweißten Stützwendel variiert werden kann. Ein weiterer Parameter zur Einstellung der Zerstörungs-Trennkraft ist schließlich die Schweißgeschwindigkeit. Je langsamer der Schweißvorgang durchgeführt wird, umso inniger ist die Verbindung zwischen den entsprechend benachbarten Profilbandabschnitten, was sich natürlich in einer Erhöhung der Trennkraft im Vergleich zu einer Stützwendelherstellung bei hoher Schweißgeschwindigkeit äußert.

Vorzugsweise weist das Profilband im Kontaktflächenbereich mindestens eine, in Bandrichtung verlaufende, Distanz bildende Rippe auf. Durch die Distanz bildende Rippe wird die Kontaktfläche reduziert, so dass mittels des sehr gezielt und lokal definiert durchführbaren Ultraschallschweißens nur ein Bruchteil der bisher benötigten Energie benötigt wird, um den Schweißvorgang durchzuführen. Neben der genaueren Schweißung ergeben sich somit auch Kostenvorteile aufgrund einer nicht unerheblichen Energieeinsparung. Die erfindungsgemäße Distanz bildende Rippe wirkt als Schweißenergierichtungsgeber, wobei der von der Rippe und dem benachbarten Profilbandabschnitt gebildete Kontaktbereich sehr klein gegenüber der entsprechenden Kontaktfläche gemäß dem Stand der Technik ist. Mittels der Ultraschallverschweißung gelingt eine direkte und gezielte Einbringung der Schweißenergie unmittelbar am Punkt der Verschweißung.

Gegenstand der Erfindung ist außerdem eine Vorrichtung zur Herstellung einer Stützwendel gemäß Anspruch 4.

Grundsätzlich erlaubt die Erfindung eine kostengünstigere Herstellung von Stützwendeln aufgrund des Einsatzes von unvernetzten oder gering vernetzten Kunststoffen. Das Ultraschallschweißen ermöglicht die Herstellung einer exakt definierten Schweißnaht, so dass die erforderliche Zerstörungs-Trennkraft sehr gezielt und gleichmäßig über die ganze Stützwendel hinweg eingestellt werden kann. Ein weiterer großer Vorteil ist die deutliche Energieeinsparung, da eine Kompletterwärmung des Bandprofiles für die Verschweißung entfällt.

Im Folgenden wird die Erfindung anhand einer lediglich ein Ausführungsbeispiel darstellenden Zeichnung ausführlich erläutert. Es zeigen schematisch:
- Fig. 1: eine mit einem erfindungsgemäßen Verfahren herstellbare Stützwendel,
- Fig. 2: ein Profilband zur Herstellung der Stützwendel gemäß Fig. 1 in der Querschnittsdarstellung.
- Fig. 3: eine der Fig. 2 entsprechenden Darstellung von benachbarten und miteinan- der verschweißten Profilbandabschnitten,
- Fig. 4 und 5: eine Darstellung einer erfindungsgemäßen Vorrichtung zur Herstellung einer Stützwendel in einer dreidimensionalen bzw. Schnittdarstellung und
- Fig. 6 und 7: die Darstellung einer erfindungsgemäßen Komplettverschweißung zur Her- stellung einer Stützwendel in einer der Fig. 4 bzw. 5 entsprechenden Darstel- lung.

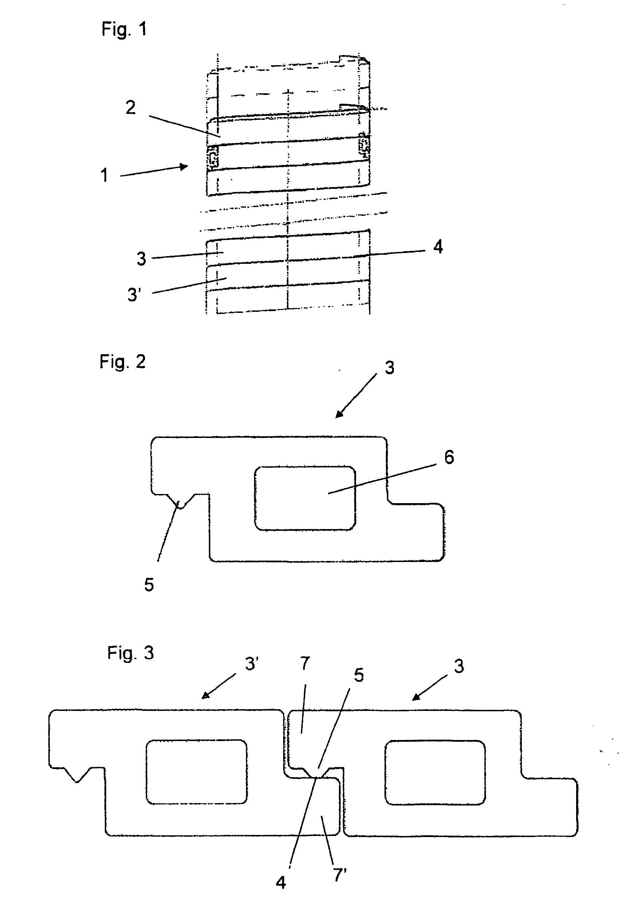

Die Fig. 1 zeigt eine Stützwendel 1, welche aus einem spiralförmig gewickelten Profilband 2 besteht. Dieses mittels eines Extrusionsvorganges aus einem Kunststoffmaterial hergestellte Profilband 2 ist entlang einer von benachbarten Profilbandabschnitten 3,3' gebildeten spiralförmigen Kontaktfläche unter Bildung einer Schweißnaht 4 verschweißt.

Der Querschnittsdarstellung dieses Profilbandes 2 in Fig. 2 ist zu entnehmen, dass das Profilband 2 im Kontaktflächenbereich (vgl. Fig. 3) eine in Bandrichtung verlaufende, bezüglich des benachbarten Profilabschnittes 3' Distanz bildende Rippe 5 aufweist. Diese Rippe 5 dient als Schweißrichtungsgeber und ermöglicht eine Verschweißung mittels Ultraschall. Aufgrund der vergleichsweise geringen Kontaktfläche zwischen Rippenende und benachbartem Profilbandabschnitt 3' ist eine gezielte Eintragung von Schweißenergie zwecks Herstellung einer stoffschlüssigen Verbindung zwischen den beiden benachbarten Profilbandabschnitten 3,3' möglich. Die beim Schweißvorgang hergestellte spiralförmige Schweißnaht 4 kann durchgehend ausgebildet sein, oder aber alternativ auch Unterbrechungen aufweisen. So ist es ggf. zweckmäßig, die Verschweißung lediglich punktuell einmal am Umfang durchzuführen, so dass beispielsweise die Schweißpunkte entlang einer parallel zur Stützwendelachse verlaufenden geraden Linie liegen. Als Werkstoff für das Profilband wird vorzugsweise ein unvernetztes bzw. ein lediglich einen geringen Vemetzungsgrad aufweisendes polymeres Material verwendet. Im Ausführungsbeispiel ist das Profilband 2 als Hohlprofil ausgebildet, welches hier einen im Querschnitt im Wesentlichen rechteckförmigen Hohlraum 6 aufweist. Am oberen sowie am unteren Ende des Profiles sind Vorsprünge 7,7' vorgesehen, welche sich im verschweißten Zustand überlappen. An einem der beiden Vorsprünge 7 ist die als Schweißrichtungsgeber fungierende Rippe 5 angeformt und zwar an einer im Wesentlichen koaxial zur Außenoberfläche der Stützwendel 1 ausgerichteten Oberfläche des entsprechenden Vorsprunges 7. Im Ausführungsbeispiel zeigt die Rippe 5 zum Inneren der Stützwendel 1. Alternativ kann die Rippe 5 aber auch an der korrespondierenden Oberfläche des benachbarten Vorsprunges 7' angeordnet sein, so dass die Rippe 5 nach außen zeigt. Die Rippe 5 weist einen dreiecksförmigen Querschnitt auf, welcher sich zur Schweißnaht 4 hin verjüngt. Die Verschweißung erfolgt lediglich an der Spitze der Rippe 5 mit dem benachbarten Vorsprung 7' des Nachbar-Bandabschnittes 3'.

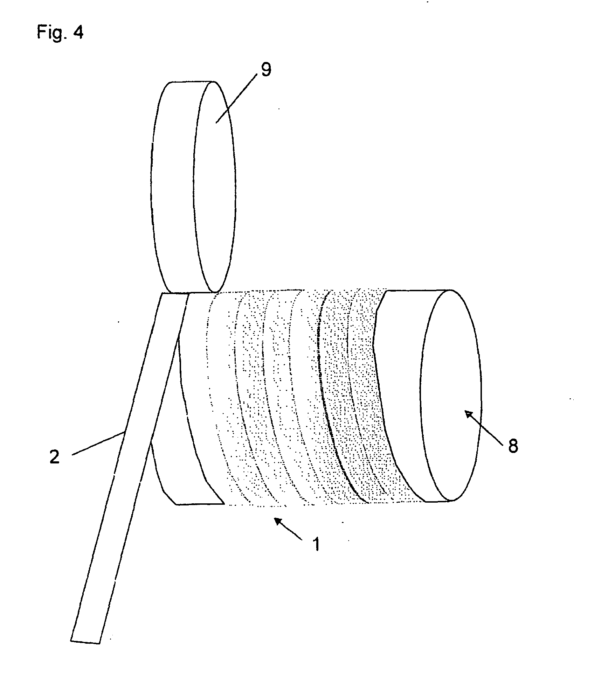

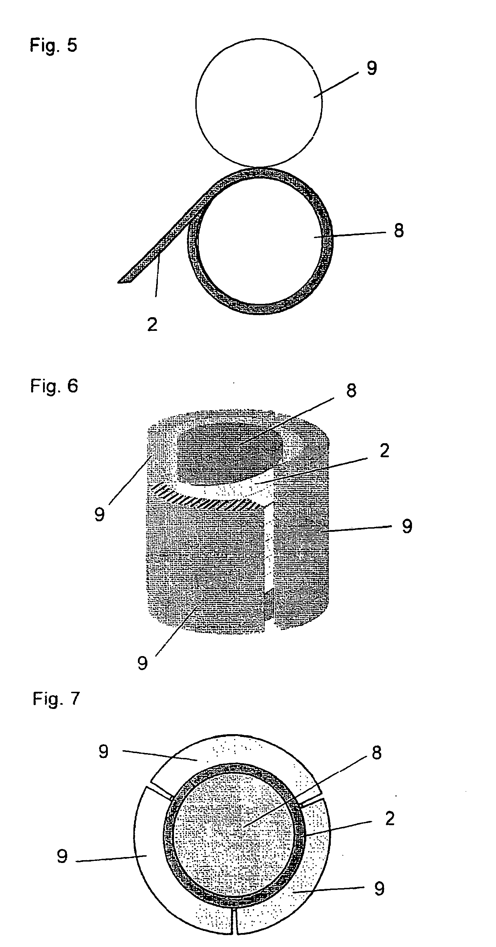

Die Figuren 4 und 5 zeigen eine erfindungsgemäße Vorrichtung zur Herstellung der in Fig. 1 dargestellten hohlzylindrischen Stützwendel 1, welche insbesondere als Bestandteil eines Kaltschrumpfsystems eingesetzt wird. Die Geometrie der Stützwendel 1 wird durch ein spiralförmiges Aufwickeln des Profilbandes 2 auf einen Wickeldorn 8 erzeugt, so dass die zueinander benachbarten Profilbandabschnitte 3,3' eine spiralförmige Kontaktfläche bilden. Zur Fixierung der Stützwendelgeometrie im Bereich der Kontaktfläche erfolgt eine Verschweißung der benachbarten Profilbandabschnitte 3,3'. Die Verschweißung wird mittels einer zylindrischen Ultraschallsonotrode 9 durchgeführt. Bei den in den Figuren 4 und 5 dargestellten Herstellungsverfahren wird der Schweißvorgang während des Wickelvorganges durchgeführt, wobei eine kontinuierliche Verschweißung entlang der Kontaktfläche erfolgt. Alternativ kann mit derselben Vorrichtung aber auch zunächst gewickelt und dann anschließend in einem separaten Vorgang geschweißt werden. Die Vorrichtung zur Herstellung der Stützwendel weist einen rotierend antreibbaren, in der Regel zylindrischen Wickeldorn 8 zum spiralförmigen Aufwickeln des die Stützwendel 1 bildenden Profilbandes 2 auf. Für den Schweißvorgang ist eine Ultraschallsonotrode 9 vorgesehen, welche zum randseitigen Verschweißen des Profilbandes 2 zwecks Fixierung der Stützwendelgeometrie dient. Die Sonotrode 9 ist zylindrisch ausgebildet und achsparallel zum zylindrisch ausgebildeten Wickeldorn 8 ausgerichtet. Im Ausführungsbeispiel gemäß Fig. 4 wird unmittelbar nach dem lokalen Wickeln des Profilbandes 2 eine kontinuierliche Verschweißung mittels der rotierenden Ultraschallsonotrode 9 durchgeführt, welche mit einem Anpressdruck auf der Profiloberfläche abrollt, also entgegen dem Wickeldorn 8 rotiert. Hierbei kann entweder die Sonotrode 9 sich während des Wickelvorganges entlang des Wickeldornes 8 bewegen und somit quasi dem Wickelvorgang folgen. Alternativ hierzu ist es jedoch auch möglich, dass die Sonotrode 9 ortsfest rotiert und stattdessen sich der Wickeldorn 8 mitsamt dem Profilband 2 während des Schweißvorganges kontinuierlich entlang der Sonotrode 9 bewegt. Denkbar ist auch, dass sowohl Sonotrode 9 als auch Wickeldorn 8 ortsfest rotieren und sich das Profilband 2 während der Stützwendelherstellung kontinuierlich über die hier glatt ausgebildete Oberfläche des Wickeldorns 8 schiebt.

Die Figuren 6 und 7 zeigen ein erfindungsgemäßes Herstellungsverfahren für die Stützwendel. Hier wird der Schweißvorgang nach dem Wickelvorgang durchgeführt, wobei eine gleichzeitige Verschweißung über die gesamte spiralförmige Kontaktfläche erfolgt. Hierzu ist mindestens eine, im Ausführungsbeispiel jedoch mehrere, Ultraschall-Sonotroden 9 vorgesehen, welche zusammen den Wickeldorn 8 praktisch komplett konzentrisch umgeben. Im Ausführungsbeispiel sind hierzu drei Sonotroden 9 vorgesehen, welche jeweils einen Überdeckungswinkel von ca. 120° aufweisen. Die gleichzeitige Komplettverschweißung ermöglicht einen sehr kurzen Schweißvorgang.

## Patentansprüche

1. Verfahren zur Herstellung einer Stützwendel (1), die insbesondere als Bestandteil eines Kaltschrumpfsystems eingesetzt wird, wobei die Geometrie der Stützwendel (1) durch ein spiralförmiges Aufwickeln eines Profilbandes (2) auf einen Wickeldorn (8) erzeugt wird, so dass die zueinander benachbarten Profilbandabschnitte (3, 3') eine spiralförmige Kontaktfläche bilden, wobei zur Fixierung der Stützwendelgeometrie im Bereich der Kontaktfläche eine Verschweißung der benachbarten Profilbandabschnitte (3, 3') erfolgt und wobei die Verschweißung mittels Ultraschall erfolgt, **dadurch gekennzeichnet, dass** der Schweißvorgang nach dem Wickelvorgang durchgeführt wird und hierbei eine gleichzeitige Verschweißung über die gesamte spiralförmige Kontaktfläche erfolgt.

2. Verfahren nach Anspruch 1, **dadurch gekennzeichnet, dass** die Verschweißung derart erfolgt, dass entlang der Kontaktfläche unverschweißte Bereiche verbleiben.

3. Verfahren nach Anspruch 1 oder 2, **dadurch gekennzeichnet, dass** das Profilband (2) im Kontaktflächenbereich mindestens eine, in Bandrichtung verlaufende, Distanz bildende Rippe (5) aufweist.

4. Vorrichtung zur Herstellung einer Stützwendel (1), die insbesondere als Bestandteil eines Kaltschrumpfsystemes einsetzbar ist, mit einem Wickeldorn (8) zum spiralförmigen Aufwickeln eines die Stützwendel (1) bildenden Profilbandes (2), wobei zumindest eine Ultraschallsonotrode (9) vorgesehen ist, die zum randseitigen Verschweißen des Profilbandes (2) zwecks Fixierung der Stützwendelgeometrie dient, **dadurch gekennzeichnet, dass** die Sonotrode (9) zylindrisch ausgebildet und achsparallel zum zylindrisch ausgebildeten Wickeldorn (8) ausgerichtet ist.

## Claims

1. Method for manufacturing a helical support (1), which is used in particular as a component of a cold-shrink system, wherein the geometry of the helical support (1) is produced by spirally winding a profile band (2) onto a winding mandrel (8) such that the mutually adjacent profile band portions (3, 3') form a spiral contact area, wherein a welding of the adjacent profile band portions (3, 3') takes place in the region of the contact area in order to fix the helical support geometry and wherein the welding takes place by means of ultrasound, **characterized in that** the welding operation is carried out after the winding operation and in this case a simultaneous welding over the entire spiral contact area takes place.

2. Method according to Claim 1, **characterized in that** the welding takes place in such a way that unwelded regions remain along the contact area.

3. Method according to Claim 1 or 2, **characterized in that** the profile band (2) has in the contact area region at least one distance-forming rib (5) extending in the band direction.

4. Device for manufacturing a helical support (1), which can be used in particular as a component of a cold-shrink system, having a winding mandrel (8) for spirally winding on a profile band (2) which forms the helical support (1), wherein there is provided at least one ultrasonic sonotrode (9) which serves for welding the profile band (2) at the edges for the purpose of fixing the helical support geometry, **characterized in that** the sonotrode (9) is cylindrical and is oriented axially parallel to the cylindrical winding mandrel (8).

## Revendications

1. Procédé de fabrication d'une hélice d'appui (1) qui est utilisée notamment en tant que constituant d'un système de retrait à froid, dans lequel la géométrie de l'hélice d'appui (1) est produite par un enroulement en spirale d'une bande profilée (2) sur un mandrin d'enroulement (8), de sorte que les portions de bande profilée (3, 3') adjacentes l'une à l'autre forment une surface de contact en forme de spirale, un soudage des portions de bande profilée (3, 3') adjacentes ayant lieu pour la fixation de la géométrie d'hélice d'appui dans la région de la surface de contact et le soudage étant effectué par ultrasons, **caractérisé en ce que** l'opération de soudage est mise en oeuvre après l'opération d'enroulement et il se produit en l'occurrence un soudage simultané sur toute la surface de contact en forme de spirale.

2. Procédé selon la revendication 1, **caractérisé en ce que** le soudage est effectué de telle sorte que des régions non soudées subsistent le long de la surface de contact.

3. Procédé selon la revendication 1 ou 2, **caractérisé en ce que** la bande profile (2) présente dans la région de la surface de contact au moins une nervure (5) formant un espacement et s'étendant dans la direction de la bande.

4. Dispositif de fabrication d'une hélice d'appui (1) qui peut être utilisée notamment en tant que constituant d'un système de retrait à froid, avec un mandrin d'enroulement (8) pour l'enroulement en spirale d'une bande profilée (2) formant l'hélice d'appui (1), au moins une sonotrode à ultrasons (9) étant prévue et servant au soudage du côté du bord de la bande profilée (2) afin de fixer la géométrie de l'hélice d'appui, **caractérisé en ce que** la sonotrode (9) est réalisée sous forme cylindrique et est orientée avec un axe parallèle au mandrin d'enroulement (8) réalisé sous forme cylindrique.
